# EUROPÄISCHE PATENTSCHRIFT

(11) **EP 4 147 009 B1**
(45) Veröffentlichungstag und Bekanntmachung des Hinweises auf die Patenterteilung: **22.05.2024**
(21) Anmeldenummer: 21724239.5
(22) Anmeldetag: 04.05.2021
(51) Int. Cl.: G01C 21/30, G01C 21/36, G01S 19/48

(54) **VERFAHREN UND VORRICHTUNG ZUM BESTIMMEN EINER POSITION EINES FAHRZEUGS IN EINEM STRASSENNETZWERK**
METHOD AND DEVICE FOR DETERMINING A POSITION OF A VEHICLE IN A ROAD NETWORK
PROCÉDÉ ET DISPOSITIF PERMETTANT DE DÉTERMINER LA POSITION D'UN VÉHICULE SUR UN RÉSEAU ROUTIER

(30) Priorität: 08.05.2020 DE 102020112482
(43) Veröffentlichungstag der Anmeldung: 15.03.2023
(73) Patentinhaber: CARIAD SE, 38440 Wolfsburg (DE)
(72) Erfinder: HOLICKI, Michael, 13505 Berlin (DE)
(74) Vertreter: Hofstetter, Schurack & Partner
(86) Internationale Anmeldenummer: PCT/EP2021/061728
(87) Internationale Veröffentlichungsnummer: WO 2021/224258

(56) Entgegenhaltungen:
- DE-A1-102010 007 091
- DE-A1-102016 214 028

## Beschreibung

Die Erfindung betrifft ein Verfahren zum Bestimmen einer Position eines Fahrzeugs in einem Straßennetzwerk mittels einer Sensorgruppe des Fahrzeugs. Die Erfindung betrifft ferner eine Vorrichtung zum Bestimmen einer Position eines Fahrzeugs in einem Straßennetzwerk mittels einer Sensorgruppe des Fahrzeugs.

Im Bereich des autonomen Fahrens sowie bei Fahrassistenzsystemen oder bei Navigationssystemen soll eine Position eines Fahrzeugs bestimmt werden. Insbesondere bei Systemen zum autonomen Fahren, aber auch bei Fahrassistenzsystemen und Navigationssystemen, muss die Bestimmung der Position mit einer hohen Genauigkeit erfolgen, um eine hohe funktionelle Sicherheit des Systems gewährleisten zu können. Die Genauigkeit der Positionsbestimmung hängt wesentlich von der Qualität der Sensordaten ab, auf deren Grundlage die Positionsbestimmung erfolgt. Ungenaue Sensordaten können zu einer ungenauen oder gar falschen Positionsbestimmung mit katastrophalen Folgen führen. Es ist daher wünschenswert eine möglichst genaue Positionsbestimmung auch mit ungenauen Sensordaten durchführen zu können.

Das Dokument Aly et al.: LaneQuest. An Accurate and Energy-Efficient Lane Detection System, preprint, arXiv:1502.03038v1, offenbart ein Verfahren zur Ermittlung einer Fahrspur eines Fahrzeugs mittels einer Sensorgruppe des Fahrzeugs. Zum Stand der Technik wird ferner auf das Dokument Zhang, M.: Methods and Implementations of Road-Network Matching. Dissertation, Technische Universität München, 2009, verwiesen, das ein Verfahren zum Vergleichen von insbesondere Stra-ßenkarten mittels semantischer Methoden offenbart.

Die DE 10 2010 007091 A1 offenbart ein Positionsbestimmungsverfahren für ein Kraftfahrzeug mit zwei aufeinanderfolgenden Durchläufen, die auf einem Map-Matching-Verfahren basieren.

Die DE 10 2016 214028 A1 offenbart ein Positionsbestimmungsverfahren für ein Fahrzeug, bei dem anhand von Landmarkenbeobachtungen die wahrscheinlichste Positionshypothese ermittelt wird.

Es ist Aufgabe der Erfindung, ein Verfahren und eine Vorrichtung zum Ermitteln einer Position eines Fahrzeugs anzugeben, die eine Ermittlung der Position auch mit ungenauen Sensordaten erlauben.

Diese Aufgabe wird durch ein Verfahren mit den Merkmalen des Anspruchs 1 und durch eine Vorrichtung mit den Merkmalen des unabhängigen Vorrichtungsanspruchs gelöst. Vorteilhafte Weiterbildungen sind in den abhängigen Ansprüchen angegeben.

Bei dem Verfahren nach Anspruch 1 wird eine Position eines Fahrzeugs in einem Straßennetzwerk, das eine Vielzahl Kanten umfasst, die jeweils einem Straßenabschnitt oder einer Spur auf einem Straßenabschnitt zugeordnet sind, mittels einer Sensorgruppe des Fahrzeugs bestimmt. Es werden mittels der Sensorgruppe erste Sensordaten erfasst. Es wird auf Grundlage der ersten Sensordaten jeder Kante einer Vielzahl erster Kanten des Straßennetzwerks jeweils eine erste Wahrscheinlichkeit zugeordnet mit der sich das Fahrzeug in dem der ersten Kante jeweils zugeordneten Straßenabschnitt oder in der der ersten Kante jeweils zugeordneten Fahrspur befindet. Es werden mittels der Sensorgruppe zweite Sensordaten erfasst. Es wird auf Grundlage der zweiten Sensordaten und der den ersten Kanten jeweils zugeordneten Wahrscheinlichkeiten jeder Kante einer Vielzahl zweiter Kanten des Straßennetzwerks jeweils eine zweite Wahrscheinlichkeit zugeordnet mit der sich das Fahrzeug in dem der zweiten Kante jeweils zugeordneten Straßenabschnitt oder in der der zweiten Kante jeweils zugeordneten Fahrspur befindet. Es wird die zweite Kante mit der höchsten zugeordneten Wahrscheinlichkeit als die Position des Fahrzeugs ermittelt.

Das Straßennetzwerk ist ein Graph, dessen Kanten jeweils einem Straßenabschnitt oder jeweils einer Fahrspur auf einem Straßenabschnitt entsprechen. Die Straßenabschnitte sind beispielsweise Abschnitte einer Straße zwischen zwei Kreuzungen, d.h. Orten, an denen die Straße mindestens eine weitere Straße kreuzt oder in diese mündet, oder zwischen einer Kreuzung und einem Ort, an dem die Straße endet. Vorzugsweise sind die Straßenabschnitte jedoch kürzer gewählt, beispielsweise mit als Abschnitte mit einer festen Länge. Den Straßenabschnitten können verschiedene Attribute wie zum Beispiel Nummer der Fahrspuren, Fahrtrichtung, Orientierungspunkten, Landmarken, Straßennamen und so weit zugeordnet werden.

In einer vorteilhaften Weiterbildung sind die Kanten direkt einer Fahrspur auf einem Straßenabschnitt zugeordnet. Das ist zum Beispiel möglich, falls eine detailliertere Karte vorhanden ist

Die Sensorgruppe umfasst zumindest einen Sensor des Fahrzeugs. Die Erfassung der ersten Sensordaten und der zweiten Sensordaten kann zeitlich aufeinander folgend erfolgen. Umfasst die Sensorgruppe mehr als einen Sensor, kann die Erfassung der ersten Sensordaten und der zweiten Sensordaten auch zeitgleich erfolgen. Die Vielzahl zweiter Kanten ist eine Teilmenge der Vielzahl erster Kanten.

Auf Grundlage der ersten Sensordaten erfolgt eine grobe Positionsbestimmung des Fahrzeugs innerhalb des Straßennetzwerks, indem jeder ersten Kante eine erste Wahrscheinlichkeit zugeordnet wird mit der sich das Fahrzeug in dem der ersten Kante jeweils zugeordneten Straßenabschnitt befindet. Die ersten Wahrscheinlichkeiten dienen zusammen mit den zweiten Wahrscheinlichkeiten als Grundlage für die Ermittlung der zweiten Wahrscheinlichkeiten. Hierdurch wird die Positionsbestimmung innerhalb des Straßennetzwerks mittels der zweiten Sensordaten verfeinert und/oder aktualisiert.

Da die Ermittlung der Position des Fahrzeugs innerhalb eines Straßennetzwerks stattfindet, das einen höheren Abstraktionsgrad aufweist, als beispielsweise ein Weltkoordinatensystem, kann das Verfahren mit ungenauen Sensordaten viel besser umgehen als andere Verfahren, die beispielsweise eine Position des Fahrzeugs innerhalb des Weltkoordinatensystems ermitteln. Da durch das Verfahren eine Wahrscheinlichkeitsverteilung aller möglichen Positionen des Fahrzeugs in dem Straßennetzwerk ermittelt wird, kann auch immer ein Maß dafür ermittelt werden, wie zuverlässig die aktuell ermittelte Position ist. Das Verfahren erlaubt ferner eine mehrdeutige Positionsermittlung, d.h. eine Positionsermittlung in der zwei oder mehr Kanten eine gleich oder eine vergleichbar große höchste Wahrscheinlichkeit zugeordnet ist.

Es versteht sich von selbst, dass das Erfassen der zweiten Sensordaten und die Ermittlung der zweiten Wahrscheinlichkeiten in zeitlich aufeinanderfolgenden Schritten wiederholt werden kann. Dabei können insbesondere die in einem ersten Schritt ermittelten zweiten Wahrscheinlichkeiten als die ersten Wahrscheinlichkeiten in einem zeitlich folgenden zweiten Schritt als Grundlage für die Ermittlung weiterer zweiter Wahrscheinlichkeiten verwendet werden. In anderen Worten: In dem zweiten Schritt werden die zweiten Wahrscheinlichkeiten auf Grundlage der im ersten Schritt ermittelten zweiten Wahrscheinlichkeiten und der im zweiten Schritt erfassten zweiten Sensordaten ermittelt. Hierdurch erfolgt eine rekursive Verfeinerung der Positionsbestimmung innerhalb des Straßennetzwerks.

Das Verfahren nach Anspruch 1 kann insbesondere in Kombination mit einem Verfahren zur metrischen Positionsbestimmung, d.h. einer Ermittlung der Position des Fahrzeugs in einem Koordinatensystem, beispielsweise eines Weltkoordinatensystems, durchgeführt werden. Beide Verfahren basieren sich auf unterschiedlichen Funktionsweisen und ergänzen sich somit. Hierdurch kann die funktionale Sicherheit eines Systems zur Ermittlung der Position des Fahrzeugs wesentlich verbessert werden.

Bei einer vorteilhaften Weiterbildung wird mittels eines Empfängers für ein Signal eines Satellitennavigationssystems der Sensorgruppe eine Sensorkoordinate des Fahrzeugs in einem Weltkoordinatensystem als zumindest ein Teil der ersten Sensordaten und/oder zumindest ein Teil der zweiten Sensordaten erfasst. Insbesondere handelt es sich bei dem Empfänger um eine GPS-Antenne. Mit Hilfe des Satellitennavigationssystems kann die Position des Fahrzeugs bis auf einige Meter genau bestimmen. Dies ist oft genau genug, um Position des Fahrzeugs auf wenige Kanten des Straßennetzwerks eingrenzen zu können. Ferner kann mittels des Satellitennavigationssystems eine Fahrtrichtung des Fahrzeugs ermittelt werden. Alternativ oder zusätzlich kann die Fahrtrichtung des Fahrzeugs mittels odometrischen Daten ermittelt werden.

Alternativ oder zusätzlich kann die Sensorkoordinate des Fahrzeugs in einem Weltkoordinatensystem mittels eines Empfängers für ein Mobilfunksignal der Sensorgruppe ermittelt werden. Grade in Bereichen mit einer hohen Dichte an Mobilfunkantennen ist eine Positionsbestimmung mittels eines Mobilfunksignals oft genauer als eine Positionsbestimmung mittels eines Satellitennavigationssystems.

In einer weiteren vorteilhaften Weiterbildung ist jeder Kante des Straßennetzwerks eine Koordinate des jeweils zugeordneten Straßenabschnitts in dem Weltkoordinatensystem zugeordnet. Es werden die ersten Wahrscheinlichkeiten ermittelt, indem die Sensorkoordinate des Fahrzeugs mit zumindest einem Teil der Koordinaten verglichen wird, die den ersten Kanten jeweils zugeordnet sind. Beispielsweise wird jeder ersten Kante eine erste Wahrscheinlichkeit in Abhängigkeit der der ersten Kanten jeweils zugeordneten Koordinate von der Sensorkoordinate zugeordnet. Je weiter die der ersten Kante zugeordnete Koordinate von der Sensorkoordinate entfernt ist, desto geringer ist die der ersten Kante zugeordnete erste Wahrscheinlichkeit. Insbesondere kann dabei angenommen werden, dass die Wahrscheinlichkeitsverteilung der tatsächlichen Koordinate des Fahrzeugs in dem Weltkoordinatensystem eine Normalverteilung um die Sensorkoordinate ist. Dies macht es möglich, die Position des Fahrzeugs innerhalb des Straßennetzwerks schnell auf wenige Kanten einzuschränken und somit den Aufwand für die Bestimmung der zweiten Wahrscheinlichkeiten zu reduzieren.

Erfindungsgemäß werden mittels einer Kamera der Sensorgruppe Bilddaten als zumindest ein Teil der ersten Sensordaten und/oder zumindest ein Teil der zweiten Sensordaten erfasst. Die Bilddaten entsprechen einem Bild eines Erfassungsbereichs vor oder hinter dem Fahrzeug. Aus den Bilddaten können eine Vielzahl qualitative Daten gewonnen werden, die eine genaue Ermittlung der Position des Fahrzeugs erlauben. Da das erfindungsgemäße Verfahren mit ungenauen Sensordaten funktioniert, muss die Kamera insbesondere nicht kalibriert sein.

In einer weiteren vorteilhaften Weiterbildung ist zumindest einer Teilmenge der Kanten des Straßennetzwerks jeweils ein Orientierungspunkt zugeordnet. Es wird auf Grundlage der Bilddaten und unter Verwendung eines Objekterkennungsverfahrens ermittelt, ob in dem Erfassungsbereich der Kamera ein Orientierungspunkt vorhanden ist. Wenn in dem Erfassungsbereich der Kamera ein Orientierungspunkt vorhanden ist, werden die ersten Wahrscheinlichkeiten auch auf Grundlage des Orientierungspunkts ermittelt. Das Vorhandensein (oder die Abwesenheit) eines Orientierungspunkts, ist ein Beispiel für qualitative Daten, die eine genaue Ermittlung der Position des Fahrzeugs erlauben. Ist beispielsweise in Erfassungsbereich der Kamera eine Brücke zu sehen, wird allen ersten Kanten, denen eine Brücke als Orientierungspunkt zugeordnet ist, eine höhere erste Wahrscheinlichkeit zugeordnet, als ersten Kanten, denen keine Brücke als Orientierungspunkt zugeordnet ist. Dabei ist vor allem unerheblich, wo genau die Brücke im Erfassungsbereich der Kamera positioniert ist. Alternativ oder zusätzlich können auch andere bekannten Landmarken, insbesondere Ampeln, Verkehrszeichen oder Verkehrszeichen, die auf eine Anschlussstelle hinweisen, als Orientierungspunkte dienen.

In einer weiteren vorteilhaften Weiterbildung ist zumindest einer Teilmenge der Kanten des Straßennetzwerks jeweils ein Straßenname zugeordnet. Es wird auf Grundlage der Bilddaten und unter Verwendung eines Texterkennungsverfahrens ermittelt, ob in dem Bild des Erfassungsbereichs ein Straßenname oder ein Teil eines Straßennamens vorhanden ist. Wenn in dem Bild des Erfassungsbereichs ein Straßenname bzw. ein Teil eines Straßennamens vorhanden ist, werden die ersten Wahrscheinlichkeiten auch auf Grundlage des Straßennamens bzw. des Teils des Straßennamens ermittelt. Straßennamen sind ein weiteres Beispiel für qualitative Daten, die eine genaue Ermittlung der Position des Fahrzeugs erlauben. Wird ein Straßenname oder ein Teil eines Straßennamens erkannt, kann die Position des Fahrzeugs oft auf eine einzige Straße eingeschränkt werden.

Erfindungsgemäß werden mittels der Bilddaten Egomotiondaten des Fahrzeugs zumindest als ein Teil der zweiten Sensordaten erfasst. Unter Egomotion wird in der vorliegenden Anmeldung die Bewegung eines Fahrzeugs in einem dreidimensionalen Raum verstanden. Unter Egomotiondaten werden entsprechend Bewegungsdaten des Fahrzeugs bzw. der Kamera, die mit dem Fahrzeug fest verbunden ist, verstanden, die auf Grundlage der durch die Kamera erfassten Bilddaten ermittelt werden. Derartige Bewegungsdaten können beispielsweise mit Bildverarbeitungsverfahren ermittelt werden, die auf optischem Fluss basieren.

In einer weiteren vorteilhaften Weiterbildung werden mittels der Sensorgruppe odometrische Daten des Fahrzeugs als zumindest ein Teil der ersten Sensordaten und/oder zumindest ein Teil der zweiten Sensordaten erfasst. Mittels odometrischer Daten, auch Wegmessdaten, kann ausgehend von einer bekannten Position des Fahrzeugs in der Vergangenheit eine gegenwärtige Position des Fahrzeugs ermittelt werden. Somit erlauben es odometrische Daten insbesondere bei wiederholter Ermittlung der zweiten Wahrscheinlichkeiten, die Position des Fahrzeugs sehr genau zu bestimmen.

In einer weiteren vorteilhaften Weiterbildung umfasst das Straßennetzwerk eine Vielzahl Knoten, die jeweils einer Verbindung zwischen mindestens zwei Straßenabschnitten oder zumindest zwei Fahrspuren zugeordnet sind. Knoten, die eine Verbindung zwischen drei oder mehr Straßenabschnitten oder zwischen drei oder mehr Fahrspuren zugeordnet sind, werden als Kreuzungen bezeichnet. Es wird auf Grundlage der ersten Sensordaten oder der zweiten Sensordaten ermittelt, ob das Fahrzeug sich in einem Straßenabschnitt oder in einer Fahrspur befindet, der an eine Kreuzung grenzt, oder ob das Fahrzeug sich in einem Straßenabschnitt befindet, der an keine Kreuzung grenzt. Es werden die ersten Wahrscheinlichkeiten bzw. die zweiten Wahrscheinlichkeiten auch auf Grundlage dieser Information ermittelt. Diese Ausführungsform verwendet die Information, ob das sich Fahrzeug in einem Straßenabschnitt oder in einer Fahrspur befindet, der an eine Kreuzung grenzt oder nicht, um die Position des Fahrzeugs einzugrenzen. Wird beispielsweise mittels der ersten Sensordaten ermittelt, dass sich das Fahrzeugs in einem Straßenabschnitt oder in einer Fahrspur befindet, der an eine Kreuzung grenzt, wird allen ersten Kanten, die an eine Kreuzung grenzen, eine höhere erste Wahrscheinlichkeit zugeordnet als allen anderen ersten Kanten.

In einer weiteren vorteilhaften Weiterbildung ist zumindest einer Teilmenge der Kanten des Straßennetzwerks jeweils mindestens eine Fahrspur zugeordnet, die einer Fahrspur des der Kante jeweils zugeordneten Straßenabschnitts entspricht. Es werden die ersten Wahrscheinlichkeiten auch auf Grundlage der den ersten Kanten jeweils zugeordneten Fahrspuren ermittelt. In dieser Weiterbildung wird die Anzahl von Fahrspuren eines Straßenabschnittes genutzt, um die Position des Fahrzeugs einzugrenzen. Wird beispielsweise mittels der ersten Sensordaten ermittelt, dass sich das Fahrzeugs auf einem Straßenabschnitt mit drei Fahrspuren befindet, wird allen ersten Kanten, denen drei Fahrspuren zugeordnet sind, eine höhere zweite Wahrscheinlichkeit zugeordnet als allen anderen ersten Kanten.

In einer weiteren vorteilhaften Weiterbildung wird auf Grundlage der zweiten Sensordaten jeder Fahrspur jeder der zweiten Kanten jeweils eine Wahrscheinlichkeit zugeordnet, mit der sich das Fahrzeug in der jeweiligen Fahrspur befindet. Es wird die Fahrspur mit der höchsten zugeordneten Wahrscheinlichkeit als ein Teil der Position des Fahrzeugs ermittelt. Wird beispielsweise mittels der zweiten Sensordaten ermittelt, dass ein Verkehrsschild rechts neben dem Fahrzeug sich befindet, wird allen zweiten Kanten, die ein Verkehrsschild von gleichem Typ wie das detektierte Verkehrsschild aufweisen, eine höhere zweite Wahrscheinlichkeit zugeordnet als allen anderen zweiten Kante.

Wird beispielsweise mittels der zweiten Sensordaten ermittelt, dass neben dem Fahrzeug jeweils eine rechte und linke Nebenspur sich befinden, wird allen zweiten Kanten, die eine rechte und linke Nebenspur aufweisen, eine höhere zweite Wahrscheinlichkeit zugeordnet als allen anderen zweiten Kante.

Insbesondere kann die Fahrspur mittels der Bilddaten der Kamera der Sensorgruppe des Fahrzeugs bestimmt werden. Die Bestimmung der Fahrspur des Straßenabschnitts in dem sich das Fahrzeug befindet erlaubt eine sehr genaue Positionsbestimmung des Fahrzeugs. Eine solche ist beispielsweise für Systeme für autonomes Fahren oder Navigationssysteme wichtig.

In einer weiteren vorteilhaften Weiterbildung wird auf Grundlage der zweiten Sensordaten für jede mögliche Fahrtrichtung des Fahrzeugs eine Wahrscheinlichkeit zugeordnet mit der sich das Fahrzeug in die jeweilige Fahrtrichtung bewegt. Es wird die Fahrtrichtung mit der höchsten zugeordneten Wahrscheinlichkeit als ein Teil der Position des Fahrzeugs ermittelt. Die Wahrscheinlichkeit mit der sich das Fahrzeug in die jeweilige Fahrtrichtung bewegt wird insbesondere unter Verwendung des probabilistischen Verfahrens ermittelt. Insbesondere kann die Fahrtrichtung mittels der odometrischen Daten, der Egomotiondaten und/oder aus dem zeitlichen Verlauf der Sensorkoordinate des Fahrzeugs bestimmt werden. Die Ermittlung der Fahrtrichtung erlaubt es insbesondere, die Position des Fahrzeugs auf bestimmte Kanten einzugrenzen. Beispielsweise können nur diejenigen Kanten ausgewählt werden, die ausgehend von einer bekannten Position des Fahrzeugs in Fahrtrichtung des Fahrzeugs liegen.

In einer weiteren vorteilhaften Weiterbildung ist zumindest einer Teilmenge der Kanten des Straßennetzwerks jeweils mindestens eine mögliche Fahrtrichtung zugeordnet. Es werden die zweiten Wahrscheinlichkeiten auch auf Grundlage der den zweiten Kanten jeweils zugeordneten möglichen Fahrtrichtungen ermittelt. Müsste sich beispielsweise das Fahrzeug entgegen einer möglichen Fahrtrichtung bewegen, um eine Kante zu erreichen wird dieser Kante eine geringe Wahrscheinlichkeit zugeordnet. Hierdurch werden insbesondere Kanten verworfen, die sich in Fahrtrichtung hinter dem Fahrzeug befinden.

In einer weiteren vorteilhaften Weiterbildung werden die der den ersten Kanten jeweils zugeordneten Wahrscheinlichkeiten mit einer Mindestwahrscheinlichkeit verglichen. Es werden diejenigen ersten Kanten, deren jeweils zugeordnete Wahrscheinlichkeiten größer oder gleich der Mindestwahrscheinlichkeit sind, als die zweiten Kanten ermittelt. In dieser Ausführungsform wird eine Vielzahl möglicher Positionen des Fahrzeugs innerhalb des Straßennetzwerks ermittelt. Die Mindestwahrscheinlichkeit kann entweder vorbestimmt sein oder beispielsweise auf Grundlage der ersten Wahrscheinlichkeiten ermittelt werden. Durch die Auswahl der zweiten Kanten, d.h. eine Beschränkung auf die wahrscheinlichsten Positionen des Fahrzeugs, lässt sich Aufwand für die Bestimmung der zweiten Wahrscheinlichkeiten stark reduzieren. Alternativ oder zusätzlich kann die Auswahl der zweiten Kanten auf Grundlage der ersten Sensordaten oder der zweiten Sensordaten erfolgen. Beispielsweise können die Kanten des Straßennetzwerks als die zweiten Kanten ermittelt werden, die in Fahrtrichtung des Fahrzeugs liegen.

In einer weiteren vorteilhaften Weiterbildung wird die Position des Fahrzeugs als Eingabe eines Systems zum autonomen Fahren des Fahrzeugs und/oder eines Fahrassistenzsystems verwendet. Alternativ oder zusätzlich wird die Position einem Fahrer des Fahrzeugs ausgegeben. Beispielsweise wird die Position auf einer Karte angezeigt.

Erfindungsgemäß werden die zweiten Wahrscheinlichkeiten unter Verwendung eines Bayes Filters, ermittelt. Dabei entsprechen die ersten Wahrscheinlichkeiten den Wahrscheinlichkeiten *p*(*zₜ*|*x*) mit denen die zum Zeitpunkt *t* erfassten ersten Sensordaten *zₜ* unter der Annahme erfasst werden, dass sich das Fahrzeug in der Position *x* befindet. Die zweiten Wahrscheinlichkeiten entsprechen den Wahrscheinlichkeiten *p*(*y*) mit denen sich das Fahrzeug zum Zeitpunkt *t* + 1 in der Position y befindet.

Die zweiten Wahrscheinlichkeiten werden mittels einer Übergangsmatrix P_{*t*+1,*y*,*t*,*x*} und der ersten Wahrscheinlichkeiten ermittelt. Die Übergangsmatrix wird auf Grundlage der Egomotiondaten und/oder der Bilddaten ermittelt. So werden Übergänge in eine Position, die entgegen der Fahrtrichtung des Fahrzeugs liegt, als unwahrscheinlich bewertet. Solche Übergänge werden auch als verbotene Übergänge bezeichnet. Weitere Beispiele für verbotene Übergange sind ein Springen von einer Straße zu einer anderen Straße, eine Einfahrt in einen Straßenabschnitt entgegen eine erlaubte Fahrtrichtung, und eine Einfahrt in eine mehrspurige Autobahn über eine Fahrspur, die nicht mit einer Anschlussstelle verbunden ist.

Ein weiterer Aspekt der Erfindung betrifft eine Vorrichtung zum Bestimmen einer Position eines Fahrzeugs in einem Straßennetzwerk. Das Straßennetzwerk umfasst eine Vielzahl Kanten, die jeweils einem Straßenabschnitt oder einer Fahrspur zugeordnet sind. Die Vorrichtung umfasst eine Sensorgruppe, die ausgebildet ist, erste Sensordaten und zweite Sensordaten zu erfassen. Die Vorrichtung umfasst ferner einen Prozessor, der ausgebildet ist, auf Grundlage der ersten Sensordaten jeder Kante einer Vielzahl erster Kanten des Straßennetzwerks jeweils eine erste Wahrscheinlichkeit zuzuordnen mit der sich das Fahrzeug in dem der ersten Kante jeweils zugeordneten Straßenabschnitt oder in der der ersten Kante jeweils zugeordneten Fahrspur befindet, auf Grundlage der zweiten Sensordaten und der den ersten Kanten jeweils zugeordneten Wahrscheinlichkeiten jeder Kante einer Vielzahl zweiter Kanten des Straßennetzwerks jeweils eine zweite Wahrscheinlichkeit zuzuordnen mit der sich das Fahrzeug in dem der zweiten Kante jeweils zugeordneten Straßenabschnitt oder in der der zweiten Kante jeweils zugeordneten Fahrspur befindet. Die Vielzahl zweiter Kanten ist zumindest eine Teilmenge der Vielzahl erster Kanten. Der Prozessor ist ferner ausgebildet, die zweite Kante mit der höchsten zugeordneten Wahrscheinlichkeit als die Position des Fahrzeugs zu ermitteln.

Die Vorrichtung hat dieselben Vorteile wie das beanspruchte Verfahren und kann auf die gleiche Weise, insbesondere mit den Merkmalen der anhängigen Ansprüche, weitergebildet werden.

Weitere Merkmale und Vorteile ergeben sich aus der folgenden Beschreibung, die eine Ausführungsform in Verbindung mit den beigefügten Figuren näher erläutert.

Es zeigen:
Figur 1 schematische Darstellung einer Vorrichtung zum Bestimmen einer Position eines Fahrzeugs in einem Straßennetzwerk;
Figur 2 einen Ausschnitt des Straßennetzwerks und die Lage einer Sensorkoordinate relativ zu dem Straßennetzwerk;
Figur 3 den Ausschnitt des Straßennetzwerks zur Verdeutlichung eines ersten Schritts zu Positionsbestimmung;
Figur 4 den Ausschnitt des Straßennetzwerks zur Verdeutlichung eines zweiten Schritts zu Positionsbestimmung;
Figur 5 den Ausschnitt des Straßennetzwerks zur Verdeutlichung einer Wiederholung des zweiten Schritts zu Positionsbestimmung; und
Figur 6 den Ausschnitt des Straßennetzwerks zur Verdeutlichung der Wiederholung des zweiten Schritts zu Positionsbestimmung;
Fig. 7 eine bevorzugte Ausführungsform, in der die Kante verschiedenen Fahrspuren auf einem Straßenabschnitt zugeordnet sind.

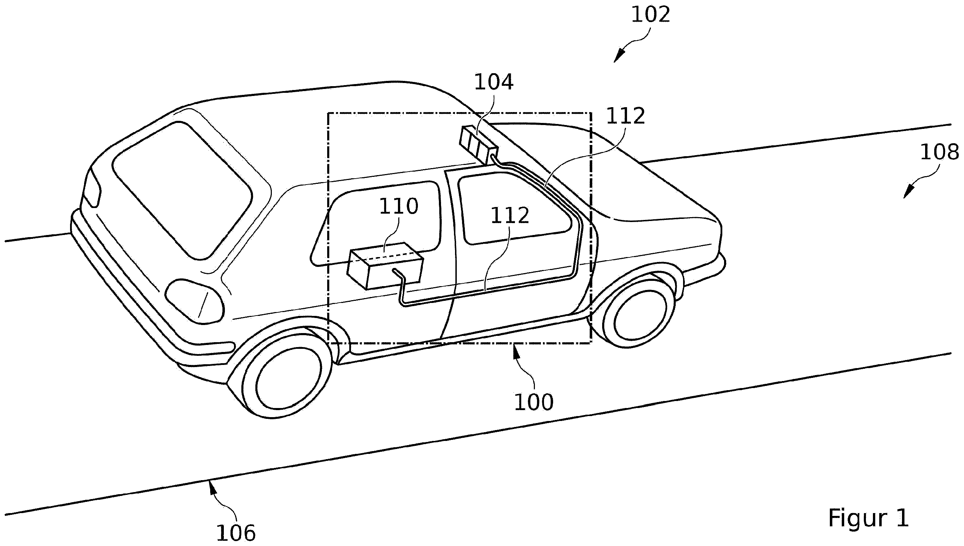

Figur 1 zeigt schematische Darstellung einer Vorrichtung 100 zum Bestimmen einer Position eines Fahrzeugs 102 in einem Straßennetzwerk mittels einer Sensorgruppe 104 eines Fahrzeugs 102.

Das Fahrzeug 102 befindet sich in einem Straßenabschnitt 106, dem eine Kante einer Vielzahl von Kanten des Straßennetzwerks zugeordnet ist und der beispielhaft eine einzige Fahrspur hat. Jeder Kante der Vielzahl von Kanten des Straßennetzwerks ist jeweils eine Koordinate des entsprechenden Straßenabschnitts 106 in einem Weltkoordinatensystem zugeordnet.

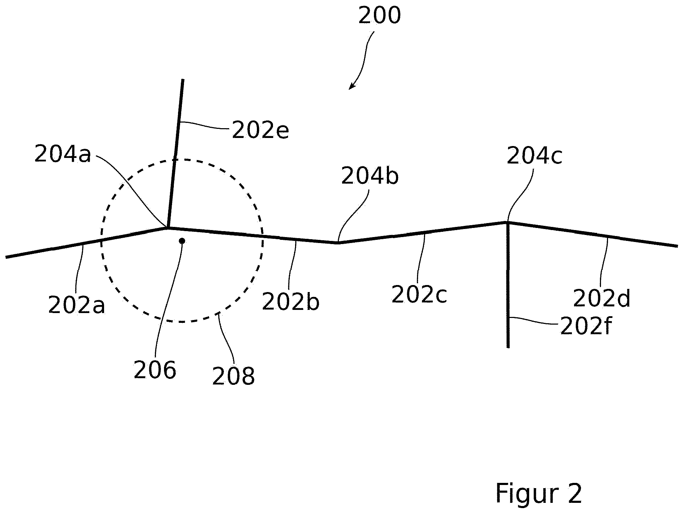

Die Vorrichtung 100 umfasst die Sensorgruppe 104, die in der gezeigten Ausführungsform eine Kamera, einen Empfänger für ein Signal eines Satellitennavigationssystems und eine Schnittstelle zum Empfangen von odometrischen Daten des Fahrzeugs 102 umfasst. Die Kamera ist in Fahrtrichtung des Fahrzeugs 102 ausgerichtet und ausgebildet Bilddaten zu erfassen, die einem Bild eines Erfassungsbereichs 108 vor dem Fahrzeug 102 entsprechen. Der Empfänger für das Signal des Satellitennavigationssystems ist ausgebildet, eine Sensorkoordinate 206 (siehe Figuren 2 bis 6) des Fahrzeugs 102 in dem Weltkoordinatensystem zu ermitteln. Die Schnittstelle zum Empfangen von odometrischen Daten des Fahrzeugs 102 ist ausgebildet, odometrische Daten, d.h. Wegmessdaten, des Fahrzeugs 102 zu empfangen. Die Wegmessdaten umfassen insbesondere eine in einem bestimmten Zeitraum zurückgelegte Entfernung.

Die Vorrichtung 100 umfasst ferner einen Prozessor 110, der mit der Sensorgruppe 104 beispielhaft mittels eines Kabels 112 verbunden ist. Der Prozessor 110 ist ausgebildet, auf Grundlage der Bilddaten und/oder unter Verwendung eines Texterkennungsverfahrens und eines Objekterkennungsverfahrens zu ermitteln, ob in dem Bild des Erfassungsbereichs 108 der Kamera ein Straßenname oder ein Teil eines Straßennamens oder ein anderer Orientierungspunkt zu sehen ist und diese Information als Orientierungspunktinformation weiterzuverarbeiten. Weiterhin ist der Prozessor 110 ausgebildet, auf Grundlage der Bilddaten und unter Verwendung eines auf optischem Fluss basierenden Bildverarbeitungsverfahrens Egomotiondaten zu ermitteln und diese weiterzuverarbeiten. Der Prozessor 110 ist ferner ausgebildet, auf Grundlage der Orientierungspunktinformation, der Egomotiondaten und der Sensorkoordinate 206 die Position des Fahrzeugs 102 in dem Straßennetzwerk zu ermitteln.

Zum Ermitteln der Position des Fahrzeugs 102 vergleicht der Prozessor 110 in einem ersten Schritt zur Positionsbestimmung die Sensorkoordinate 206 mit den Koordinaten, die jeweils den Kanten einer Vielzahl erster Kanten des Straßennetzwerks zugeordnet sind. Die ersten Kanten können dabei eine Teilmenge aller Kanten oder alle Kanten des Straßennetzwerks sein. Unter der Annahme, dass die Wahrscheinlichkeitsverteilung der tatsächlichen Position des Fahrzeugs 102 eine Normalverteilung ist, ordnet der Prozessor 110 jeder Kante eine erste Wahrscheinlichkeit zu mit der sich das Fahrzeug 102 in dem der jeweiligen Kante zugeordneten Straßenabschnitt 106 befindet. Der Prozessor 110 modifiziert dann die ersten Wahrscheinlichkeiten auf Grundlage der Orientierungspunktinformation. Ist beispielsweise in dem Bild des Erfassungsbereichs 108 eine Brücke erkannt worden, passt der Prozessor 110 die ersten Wahrscheinlichkeiten derart an, dass die erste Wahrscheinlichkeit aller ersten Kanten, denen keine Brücke als Orientierungspunkt zugeordnet ist, verringert wird.

In einem zweiten Schritt zur Positionsbestimmung, der zeitlich unmittelbar auf den ersten Schritt folgt, ordnet der Prozessor 110 auf Grundlage der Egomotiondaten, der Bilddaten, der odometrischen Daten und der den ersten Kanten jeweils zugeordneten Wahrscheinlichkeiten und unter Verwendung eines Bayes Filters für jeder Kante einer Vielzahl zweiter Kanten des Straßennetzwerks jeweils eine zweite Wahrscheinlichkeit zu, mit der sich das Fahrzeug 102 in dem der zweiten Kante jeweils zugeordneten Straßenabschnitt 106 befindet. Der Prozessor 110 ermittelt dann die zweite Kante mit der höchsten zugeordneten Wahrscheinlichkeit als die Position des Fahrzeugs 102.

Der Ablauf des Verfahrens zum Bestimmen der Position des Fahrzeugs 102 in dem Straßennetzwerk wird im Folgenden anhand der Figuren 2 bis 6 noch näher erläutert, die jeweils einen Ausschnitt 200 des Straßennetzwerks zeigen. Der Ausschnitt 200 umfasst sechs Kanten 202a bis 202f, die jeweils einem Straßenabschnitt 106 entsprechen und drei Knoten 204a bis 204c, welche die Kanten 202a bis 202f verbinden. Von den drei Knoten 204a bis 204c verbinden zwei Knoten 204a, 204c mehr als zwei der Kanten 202a bis 202f. Diese Knoten 204a, 204c werden im Folgenden auch als Kreuzungen bezeichnet. Der Ausschnitt 200 entspricht einer in den Figuren 2 bis 6 von links nach rechts gehenden Einbahnstraße, die an zwei Kreuzungen 204a, 204c von jeweils einer weiteren Straße 202f, 202f geschnitten wird.

Figur 2 zeigt die Lage der Sensorkoordinate 206 relativ zu dem Straßennetzwerk als einen Punkt. Die Sensorkoordinate 206 entspricht in der gezeigten Ausführungsform den ersten Sensordaten und ist mit einem Messfehler behaftet, der als normalverteilt angenommen wird. Beispielhaft ist in Figur 2 eine Isolinie 208 der zweidimensionalen Normalverteilung des Messfehlers als gestrichelter Kreis dargestellt. Der gestrichelte Kreis bedeckt die drei in Figur 2 am linksten gezeigten Kanten 202a, 202b, 202f zumindest teilweise. Dies bedeutet, dass diese drei Kanten 202a, 202b, 202f innerhalb des Messfehlers der Sensorkoordinate 206 mögliche Positionen des Fahrzeugs 102 sind.

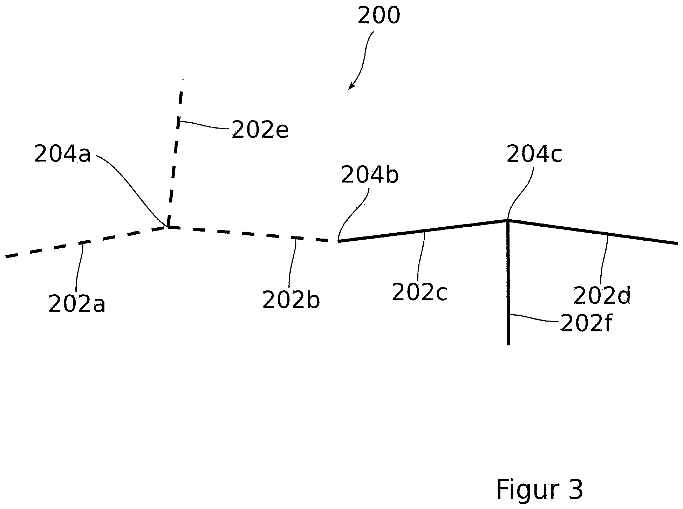

Figur 3 zeigt den Ausschnitt 200 des Straßennetzwerks nach Figur 2. Figur 3 veranschaulicht den ersten Schritt zur Positionsbestimmung nach Figur 1. Alle Kanten 202a bis 202f des in Figur 3 gezeigten Ausschnitts 200 des Straßennetzwerks werden als die ersten Kanten ausgewählt. Die drei Kanten 202a, 202b, 202f, die innerhalb des Messfehlers der Sensorkoordinate 206 liegen, sind in Figur 3 gestrichelt dargestellt. Diesen drei Kanten 202a, 202b, 202f wird im ersten Schritt zur Positionsbestimmung eine hohe erste Wahrscheinlichkeit zugeordnet. In anderen Worten: Im ersten Schritt wird davon ausgegangen, dass sich das Fahrzeug 102 höchstwahrscheinlich in einer dieser drei ersten Kanten 202a, 202b, 202f befindet.

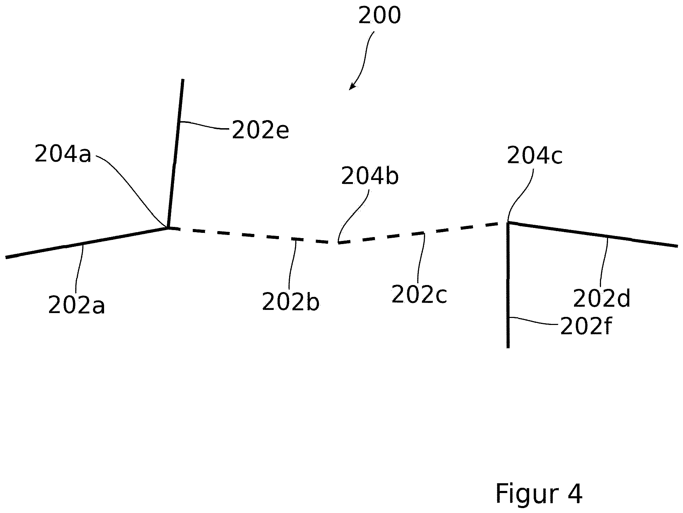

Figur 4 zeigt den Ausschnitt 200 des Straßennetzwerks nach Figur 2 und veranschaulicht den zweiten Schritt zur Positionsbestimmung nach Figur 1. Im zweiten Schritt werden unter Verwendung der Egomotiondaten, der odometrischen Daten und der den ersten Kanten jeweils zugeordneten ersten Wahrscheinlichkeit unter

Verwendung des Bayes Filters die zweiten Wahrscheinlichkeiten ermittelt. Die Egomotiondaten besagen, dass sich das Fahrzeug 102 vorwärts in eine bestimmte Richtung bewegt hat, aber keine große Änderung der Fahrtrichtung erfolgt ist. Letzteres schließt aus, dass sich das Fahrzeug 102 in der in die Einbahnstraße mündenden Kante 202e befindet oder befunden hat, denn in diesem Fall hätte das Fahrzeug 102 abbiegen müssen. Unter Berücksichtigung der odometrischen Daten und der Tatsache, dass sich das Fahrzeug 102 auf einer Einbahnstraße befindet, können den zwei Kanten 202b, 202c, die sich zwischen den beiden Kreuzungen 204a, 204c befinden, die höchste zweite Wahrscheinlichkeit zugeordnet werden. Diese beiden zweiten Kanten 202b, 202c sind in Figur 4 gestrichelt dargestellt.

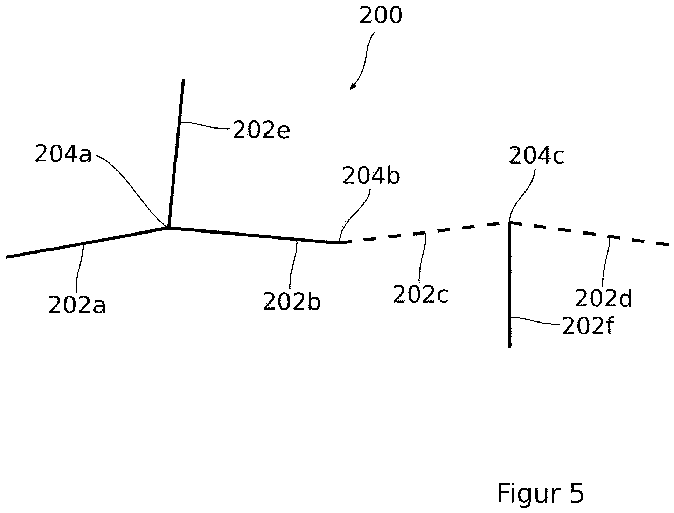

Figur 5 zeigt den Ausschnitt 200 des Straßennetzwerks nach Figur 2 und veranschaulicht eine erste Wiederholung des zweiten Schritts zur Positionsbestimmung nach Figur 1. In der ersten Wiederholung des zweiten Schritts werden unter Verwendung neuer Egomotiondaten, neuer odometrischer Daten und der den zweiten Kanten 202b, 202c im vorangegangenen zweiten Schritt jeweils zugeordneten zweiten Wahrscheinlichkeit unter Verwendung des Bayes Filters neue zweiten Wahrscheinlichkeiten ermittelt. Auch die neuen Egomotiondaten besagen, dass sich das Fahrzeug 102 vorwärts bewegt hat, aber nicht abgebogen ist. Somit kann sich das Fahrzeug 102 nicht auf der in die Einbahnstraße mündenden Kante 202f befinden, der in Figur 5 rechts dargestellt ist. Unter Berücksichtigung der odometrischen Daten, können den zwei Kanten 202c, 202d, die an die in Figur 4 rechts dargestellte Kreuzung grenzen, die höchste zweite Wahrscheinlichkeit zugeordnet werden. Diese beiden zweiten Kanten sind in Figur 5 gestrichelt dargestellt.

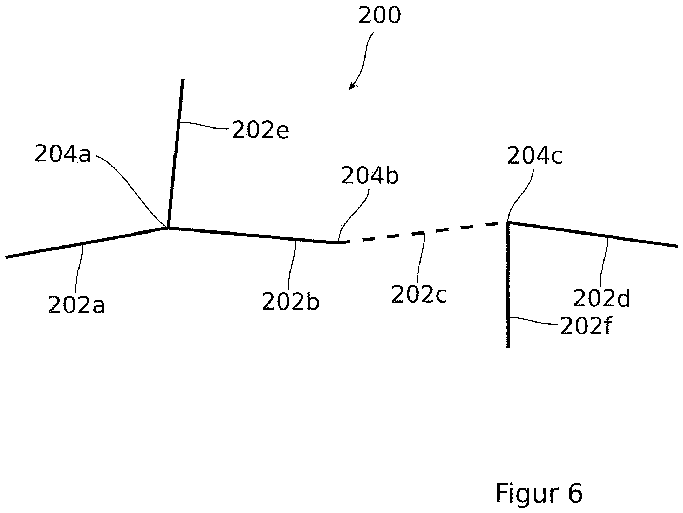

Figur 6 zeigt den Ausschnitt 200 des Straßennetzwerks nach Figur 2 und veranschaulicht wie die Positionsbestimmung nach Figur 5 auf Grundlage der Bilddaten verbessert werden kann. In dem Bild des Erfassungsbereichs 108 der Kamera, der sich vor dem Fahrzeug 102 befindet, ist ein Verkehrsschild zu sehen, welches der in die Einbahnstraße mündenden Kante 202f zugeordnet ist, die in Figur 5 rechts dargestellt ist. Das Verkehrsschild ist Teil der Orientierungspunktinformation. Da das Verkehrsschild vor dem Fahrzeug 102 zu sehen ist, kann unter Berücksichtigung der Fahrtrichtung des Fahrzeugs 102 und der Tatsache, dass sich das Fahrzeug 102 auf einer Einbahnstraße befindet, ausgeschlossen werden, dass sich das Fahrzeug 102 in der Kante 202d befindet, die in Figur 6 ganz rechts dargestellt ist. Somit kann einer einzigen Kante die höchste zweite Wahrscheinlichkeit zugeordnet werden. Diese zweite Kante ist in Figur 6 gestrichelt dargestellt.

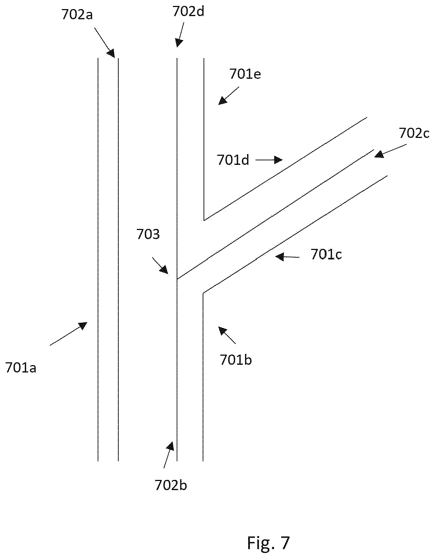

Figur 7 zeigt eine bevorzugte Ausführungsform, in der die Kante 702a bis 702d verschiedenen Fahrspuren auf einem Straßenabschnitt zugeordnet sind. Die Fahrspure befinden sich innerhalb den Straßenabschnitten 701a bis 701 e. Die Fahrspur 702a ist nicht mit den Fahrspuren 702b, 702c und 702d verbunden. Die Knote 703 verbindet die Fahrspur 702b mit der Fahrspur 702c und der Fahrspur 702d.

Alle Kanten 702a bis 202d des in Figur 7 gezeigten Ausschnitts 700 des Straßennetzwerks werden als die ersten Kanten ausgewählt. Den drei Kanten 702b, 702c, 702d, die innerhalb des Messfehlers der Sensorkoordinate 206 liegen, wird im ersten Schritt zur Positionsbestimmung eine hohe erste Wahrscheinlichkeit zugeordnet. In anderen Worten: Im ersten Schritt wird davon ausgegangen, dass sich das Fahrzeug 102 höchstwahrscheinlich in einer dieser drei ersten Kanten 702b, 202c, 702d befindet.

Im zweiten Schritt werden unter Verwendung der Egomotiondaten, der odometrischen Daten und der den ersten Kanten jeweils zugeordneten ersten Wahrscheinlichkeit unter Verwendung des Bayes Filters die zweiten Wahrscheinlichkeiten ermittelt. Die Egomotiondaten besagen, dass sich das Fahrzeug 102 vorwärts in eine bestimmte Richtung bewegt hat, aber keine große Änderung der Fahrtrichtung erfolgt ist. Letzteres schließt aus, dass sich das Fahrzeug 102 in der mündenden Kante 702c befindet oder befunden hat, denn in diesem Fall hätte das Fahrzeug 102 abbiegen müssen. Unter Berücksichtigung der odometrischen Daten und der Tatsache, dass sich das Fahrzeug 102 auf einer Einbahnstraße befindet, können den zwei Kanten 702b, 702d, die höchste zweite Wahrscheinlichkeit zugeordnet werden.

In der ersten Wiederholung des zweiten Schritts werden unter Verwendung neuer Egomotiondaten, neuer odometrischer Daten, neuer Bilddaten und der den zweiten Kanten 702b, 702d im vorangegangenen zweiten Schritt jeweils zugeordneten zweiten Wahrscheinlichkeit unter Verwendung des Bayes Filters neue zweiten Wahrscheinlichkeiten ermittelt.

In dem Bild des Erfassungsbereichs 108 der Kamera, der sich vor dem Fahrzeug 102 befindet, ist eine Ampel zu sehen, welche der Kante 702d zugeordnet ist. Da die Ampel vor dem Fahrzeug 102 zu sehen ist, kann unter Berücksichtigung der Fahrtrichtung des Fahrzeugs 102 und der Tatsache, dass sich das Fahrzeug 102 auf einer Einbahnstraße befindet, ausgeschlossen werden, dass sich das Fahrzeug 102 in der Kante 702b befindet. Somit kann einer einzigen Kante (702d) die höchste zweite Wahrscheinlichkeit zugeordnet werden.

Anhand der Figuren 1 bis 7 sind das erfindungsgemäße Verfahren und die erfindungsgemäße Vorrichtung 100 anhand einer Ausführungsform beispielhaft beschrieben. Insbesondere kann die Sensorgruppe 104 weitere oder andere Sensoren umfassen, die in der gezeigten Ausführungsform nicht vorhanden sind. Beispiele für weitere Sensoren sind ein Empfänger für ein Mobilfunksignal, eine weitere Kamera, die Bilddaten erfasst, die einem Bild eines Erfassungsbereichs 108 hinter dem Fahrzeug 102 und/oder seitlich des Fahrzeugs 102 entsprechen, ein Radar- oder Lidarsensor sowie Akzelerometer oder Gyroskope zum Erfassen odometrischer Daten.

## Patentansprüche

1. Verfahren zum Bestimmen einer Position eines Fahrzeugs (102) in einem Straßennetzwerk, das eine Vielzahl Kanten (202a bis 202f) umfasst, die jeweils einem Straßenabschnitt (106) oder einer Fahrspur auf einem Stra-ßenabschnitt zugeordnet sind, mittels einer Sensorgruppe (104) des Fahrzeugs (102), bei dem
mittels der Sensorgruppe (104) erste Sensordaten erfasst werden,
auf Grundlage der ersten Sensordaten jeder Kante einer Vielzahl erster Kanten des Straßennetzwerks jeweils eine erste Wahrscheinlichkeit zugeordnet wird, mit der sich das Fahrzeug (102) in dem der ersten Kante jeweils zugeordneten Straßenabschnitt (106) oder in der der ersten Kante jeweils zugeordneten Fahrspur befindet,
mittels der Sensorgruppe (104) zweite Sensordaten erfasst werden,
auf Grundlage der zweiten Sensordaten und der den ersten Kanten jeweils zugeordneten Wahrscheinlichkeiten jeder Kante einer Vielzahl zweiter Kanten des Straßennetzwerks jeweils eine zweite Wahrscheinlichkeit zugeordnet wird, mit der sich das Fahrzeug (102) in dem der zweiten Kante jeweils zugeordneten Straßenabschnitt (106) oder in der der zweiten Kante jeweils zugeordneten Fahrspur befindet, und
die zweite Kante mit der höchsten zugeordneten Wahrscheinlichkeit als die Position des Fahrzeugs (102) ermittelt wird,
**dadurch gekennzeichnet, dass**
die Vielzahl zweiter Kanten eine Teilmenge der Vielzahl erster Kanten ist, und
die zweiten Wahrscheinlichkeiten unter Verwendung eines Bayes Filters mittels einer Übergangsmatrix *P*_{*t*+1*,*y,*t*,}*ₓ* und der ersten Wahrscheinlichkeiten ermittelt werden, wobei die ersten Wahrscheinlichkeiten den Wahrscheinlichkeiten *p*(*zₜ*|*x*) entsprechen, mit denen die zum Zeitpunkt *t* erfassten ersten Sensordaten *zₜ* unter der Annahme erfasst werden, dass sich das Fahrzeug in einer Position *x* befindet, und die zweiten Wahrscheinlichkeiten den Wahrscheinlichkeiten *p*(*y*) entsprechen, mit denen sich das Fahrzeug zum Zeitpunkt *t* + 1 in einer Position *y* befindet, und
die Übergangsmatrix auf Grundlage von Egomotiondaten und/oder Bilddaten ermittelt wird, und hierbei Übergänge in eine Position, die entgegen der Fahrtrichtung des Fahrzeugs liegt, als unwahrscheinlich bewertet werden, wobei die Bilddaten mittels einer Kamera der Sensorgruppe (104) als zumindest ein Teil der ersten Sensordaten und/oder als zumindest ein Teil der zweiten Sensordaten erfasst werden, wobei die Bilddaten einem Bild eines Erfassungsbereichs (108) vor oder hinter dem Fahrzeug (102) entsprechen, und wobei mittels der Bilddaten die Egomotiondaten des Fahrzeugs (102) zumindest als ein Teil der zweiten Sensordaten erfasst werden.

2. Verfahren nach Anspruch 1, wobei mittels eines Empfängers für ein Signal eines Satellitennavigationssystems der Sensorgruppe (104) eine Sensorkoordinate (206) des Fahrzeugs (102) in einem Weltkoordinatensystem als zumindest ein Teil der ersten Sensordaten und/oder zumindest ein Teil der zweiten Sensordaten erfasst wird.

3. Verfahren nach Anspruch 2, wobei jeder Kante des Straßennetzwerks eine Koordinate des jeweils zugeordneten Straßenabschnitts (106) in dem Weltkoordinatensystem zugeordnet ist, und wobei die ersten Wahrscheinlichkeiten ermittelt werden, indem die Sensorkoordinate (206) des Fahrzeugs (102) mit zumindest einem Teil der Koordinaten verglichen wird, die den ersten Kanten jeweils zugeordnet sind.

4. Verfahren nach einem der vorhergehenden Ansprüche, wobei zumindest einer Teilmenge der Kanten (202a bis 202f) des Straßennetzwerks jeweils ein Orientierungspunkt zugeordnet ist, wobei auf Grundlage der Bilddaten und unter Verwendung eines Objekterkennungsverfahrens ermittelt wird, ob in dem Erfassungsbereich der Kamera ein Orientierungspunkt vorhanden ist, und wobei, wenn in dem Erfassungsbereich der Kamera ein Orientierungspunkt vorhanden ist, die ersten Wahrscheinlichkeiten auch auf Grundlage des Orientierungspunkts ermittelt werden.

5. Verfahren nach einem der vorhergehenden Ansprüche, wobei zumindest einer Teilmenge der Kanten (202a bis 202f) des Straßennetzwerks jeweils eine Landmarke, insbesondere eine Ampel oder ein Verkehrsschild, zugeordnet ist, wobei auf Grundlage der Bilddaten ermittelt wird, ob in dem Bild des Erfassungsbereichs (108) eine Landmarke vorhanden ist, und wobei, wenn in dem Bild des Erfassungsbereichs (108) eine Landmarke vorhanden ist, die zweiten Wahrscheinlichkeiten auch auf Grundlage der Landmarke ermittelt werden.

6. Verfahren nach einem der vorhergehenden Ansprüche, wobei das Stra-ßennetzwerk eine Vielzahl Knoten (204a bis 204c) umfasst, die jeweils einer Verbindung zwischen mindestens zwei Straßenabschnitten (106) oder zwischen zumindest zwei Fahrspuren zugeordnet sind, wobei Knoten (204a bis 204c), die eine Verbindung zwischen drei oder mehr Straßenabschnitten (106) oder zwischen drei oder mehr Fahrspuren zugeordnet sind, als Kreuzungen bezeichnet werden, wobei auf Grundlage der ersten Sensordaten oder zweiten Sensordaten ermittelt wird, ob das Fahrzeug (102) sich in einem Straßenabschnitt(106) oder in einer Fahrspur befindet, der an eine Kreuzung grenzt, oder ob das Fahrzeug (102) sich in einem Straßenabschnitt (106) oder in einer Fahrspur befindet, der an keine Kreuzung grenzt, und wobei die ersten Wahrscheinlichkeiten bzw. die zweiten Wahrscheinlichkeiten auch auf Grundlage dieser Information ermittelt werden.

7. Verfahren nach einem der vorhergehenden Ansprüche, wobei zumindest einer Teilmenge der Kanten (202a bis 202f) des Straßennetzwerks jeweils mindestens eine Fahrspur zugeordnet ist, die einer Fahrspur des der Kante jeweils zugeordneten Straßenabschnitts (106) entspricht, und wobei die ersten Wahrscheinlichkeiten und/oder zweiten Wahrscheinlichkeiten auch auf Grundlage der den zweiten Kanten jeweils zugeordneten Fahrspuren ermittelt werden.

8. Verfahren nach Anspruch 7, wobei auf Grundlage der zweiten Sensordaten jeder Fahrspur jeder der zweiten Kante jeweils eine Wahrscheinlichkeit zugeordnet wird mit der sich das Fahrzeug (102) in der jeweiligen Fahrspur befindet, und
wobei die Fahrspur mit der höchsten zugeordneten Wahrscheinlichkeit als ein Teil der Position des Fahrzeugs (102) ermittelt wird.

9. Verfahren nach einem der vorhergehenden Ansprüche, wobei auf Grundlage der zweiten Sensordaten für jede mögliche Fahrtrichtung des Fahrzeugs (102) eine Wahrscheinlichkeit zugeordnet wird mit der sich das Fahrzeug (102) in die jeweilige Fahrtrichtung bewegt,
die Fahrtrichtung mit der höchsten zugeordneten Wahrscheinlichkeit als ein Teil der Position des Fahrzeugs (102) ermittelt wird.

10. Verfahren nach einem der vorhergehenden Ansprüche, wobei zumindest einer Teilmenge der Kanten (202a bis 202f) des Straßennetzwerks jeweils mindestens eine mögliche Fahrtrichtung zugeordnet ist, und wobei die ersten Wahrscheinlichkeiten auch auf Grundlage der den ersten Kanten jeweils zugeordneten möglichen Fahrtrichtungen ermittelt werden.

11. Verfahren nach einem der vorhergehenden Ansprüche, wobei die den ersten Kanten jeweils zugeordneten Wahrscheinlichkeiten mit einer Mindestwahrscheinlichkeit verglichen werden, und wobei diejenigen ersten Kanten, deren jeweils zugeordnete Wahrscheinlichkeiten größer oder gleich der Mindestwahrscheinlichkeit sind, als die zweiten Kanten ermittelt werden.

12. Vorrichtung (100) zum Bestimmen einer Position eines Fahrzeugs (102) in einem Straßennetzwerk, das eine Vielzahl Kanten (202a bis 202f) umfasst, die jeweils einem Straßenabschnitt (106) oder einer Fahrspur zugeordnet sind, wobei die Vorrichtung (100) umfasst:
eine Sensorgruppe (104), die ausgebildet ist, erste Sensordaten und zweite Sensordaten zu erfassen;
einen Prozessor (110), der ausgebildet ist,
auf Grundlage der ersten Sensordaten jeder Kante einer Vielzahl erster Kanten des Straßennetzwerks jeweils eine erste Wahrscheinlichkeit zuzuordnen mit der sich das Fahrzeug (102) in dem der ersten Kante jeweils zugeordneten Straßenabschnitt (106) oder in der der ersten Kante jeweils zugeordneten Fahrspur befindet,
**dadurch gekennzeichnet, dass**
der Prozessor (110) ausgebildet ist,
auf Grundlage der zweiten Sensordaten und der den ersten Kanten jeweils zugeordneten Wahrscheinlichkeiten jeder Kante einer Vielzahl zweiter Kanten des Straßennetzwerks jeweils eine zweite Wahrscheinlichkeit zuzuordnen mit der sich das Fahrzeug (102) in dem der zweiten Kante jeweils zugeordneten Straßenabschnitt (106) oder in der der zweiten Kante jeweils zugeordneten Fahrspur befindet, wobei die Vielzahl zweiter Kanten zumindest eine Teilmenge der Vielzahl erster Kanten ist, und
die zweite Kante mit der höchsten zugeordneten Wahrscheinlichkeit als die Position des Fahrzeugs (102) zu ermitteln, und
die zweiten Wahrscheinlichkeiten unter Verwendung eines Bayes Filters mittels einer Übergangsmatrix *P*_{*t*+1,y,*t*,*x*} und der ersten Wahrscheinlichkeiten zu ermitteln, wobei die ersten Wahrscheinlichkeiten den Wahrscheinlichkeiten *p*(*zₜ*|*x*) entsprechen, mit denen die zum Zeitpunkt t erfassten ersten Sensordaten *zₜ* unter der Annahme erfasst sind, dass sich das Fahrzeug in einer Position *x* befindet, und die zweiten Wahrscheinlichkeiten den Wahrscheinlichkeiten *p*(*y*) entsprechen, mit denen sich das Fahrzeug zum Zeitpunkt *t* + 1 in einer Position y befindet, und
der Prozessor (110) ausgebildet ist, die Übergangsmatrix auf Grundlage von Egomotiondaten und/oder Bilddaten zu ermitteln, und hierbei Übergänge in eine Position, die entgegen der Fahrtrichtung des Fahrzeugs liegt, als unwahrscheinlich zu bewerten, wobei eine Kamera der Sensorgruppe (104) ausgebildet ist, die Bilddaten als zumindest ein Teil der ersten Sensordaten und/oder zumindest ein Teil der zweiten Sensordaten zu erfassen, wobei die Bilddaten einem Bild eines Erfassungsbereichs (108) vor oder hinter dem Fahrzeug (102) entsprechen und die Kamera ausgebildet ist, mittels der Bilddaten die Egomotiondaten des Fahrzeugs (102) zumindest als ein Teil der zweiten Sensordaten zu erfassen.

## Claims

1. A method for determining a position of a vehicle (102) in a road network, which includes a plurality of edges (202a to 202f), which are each associated with a road section (106) or a lane on a road section, by means of a sensor group (104) of the vehicle (102), in which
first sensor data is captured by means of the sensor group (104),
based on the first sensor data, a first probability is respectively associated with each edge of a plurality of first edges of the road network, with which the vehicle (102) is located in the road section (106) respectively associated with the first edge or in the lane respectively associated with the first edge, second sensor data is captured by means of the sensor group (104),
based on the second sensor data and the probabilities respectively associated with the first edges, a second probability is respectively associated with each edge of a plurality of second edges of the road network, with which the vehicle (102) is located in the road section (106) respectively associated with the second edge or in the lane respectively associated with the second edge, and
the second edge with the highest associated probability is ascertained as the position of the vehicle (102),
**characterized in that**
the plurality of second edges is a subset of the plurality of first edges, and the second probabilities are ascertained using a Bayes filter by means of a transition matrix P_{t+1,y,t,x} and the first probabilities, wherein the first probabilities correspond to the probabilities p(zₜlx), with which the first sensor data zₜ captured at the point of time t is captured on the assumption that the vehicle is located in a position x, and the second probabilities correspond to the probabilities p(y), with which the vehicle is located in a position y at the point of time t+1, and
the transition matrix is ascertained based on ego motion data and/or image data, and transitions into a position, which is opposite to the direction of travel of the vehicle, are herein evaluated as improbable, wherein the image data is captured by means of a camera of the sensor group (104) as at least a part of the first sensor data and/or as at least a part of the second sensor data, wherein the image data corresponds to an image of a capturing range (108) in front of or behind the vehicle (102), and wherein the ego motion data of the vehicle (102) is captured at least as a part of the second sensor data by means of the image data.

2. The method according to claim 1, wherein a sensor coordinate (206) of the vehicle (102) is captured in a world coordinate system as at least a part of the first sensor data and/or at least a part of the second sensor data by means of a receiver for a signal of a satellite navigation system of the sensor group (104).

3. The method according to claim 2, wherein a coordinate of the respectively associated road section (106) is associated with each edge of the road network in the world coordinate system, and wherein the first probabilities are ascertained in that the sensor coordinate (206) of the vehicle (102) is compared to at least a part of the coordinates, which are each associated with the first edges.

4. The method according to any one of the preceding claims, wherein an orientation point is respectively associated with at least a subset of the edges (202a to 202f) of the road network, wherein it is ascertained based on the image data and using an object recognition method if an orientation point is present in the capturing range of the camera, and wherein, if an orientation point is present in the capturing range of the camera, the first probabilities are also ascertained based on the orientation point.

5. The method according to any one of the preceding claims, wherein a landmark, in particular a traffic light or a traffic sign, is respectively associated with at least a subset of the edges (202a to 202f) of the road network, wherein it is ascertained based on the image data if a landmark is present in the image of the capturing range (108), and wherein, if a landmark is present in the image of the capturing range (108), the second probabilities are also ascertained based on the landmark.

6. The method according to any one of the preceding claims, wherein the road network includes a plurality of nodes (204a to 204c), which are each associated with a connection between at least two road sections (106) or between at least two lanes, wherein nodes (204a to 204c), which are associated with a connection between three or more road sections (106) or between three or more lanes, are designated as intersections, wherein it is ascertained based on the first sensor data or second sensor data if the vehicle (102) is located in a road section (106) or in a lane, which adjoins to an intersection, or if the vehicle (102) is located in a road section (106) or in a lane, which does not adjoin to an intersection, and wherein the first probabilities and the second probabilities, respectively, are also ascertained based on this information.

7. The method according to any one of the preceding claims, wherein at least one lane is respectively associated with at least a subset of the edges (202a to 202f) of the road network, which corresponds to a lane of the road section (106) respectively associated with the edge, and wherein the first probabilities and/or second probabilities are also ascertained based on the lanes respectively associated with the second edges.

8. The method according to claim 7, wherein a probability is respectively associated with each lane of each of the second edge based on the second sensor data, with which the vehicle (102) is located in the respective lane, and
wherein the lane with the highest associated probability is ascertained as a part of the position of the vehicle (102).

9. The method according to any one of the preceding claims, wherein a probability is associated for each possible direction of travel of the vehicle (102) based on the second sensor data, with which the vehicle (102) moves in the respective direction of travel,
the direction of travel with the highest associated probability is ascertained as a part of the position of the vehicle (102).

10. The method according to any one of the preceding claims, wherein at least one possible direction of travel is respectively associated with at least a subset of the edges (202a to 202f) of the road network, and wherein the first probabilities are also ascertained based on the possible directions of travel respectively associated with the first edges.

11. The method according to any one of the preceding claims, wherein the probabilities respectively associated with the first edges are compared to a minimum probability, and wherein those first edges, the respectively associated probabilities of which are greater than or equal to the minimum probability, are ascertained as the second edges.

12. A device (100) for determining a position of a vehicle (102) in a road network, which includes a plurality of edges (202a to 202f), which are each associated with a road section (106) or a lane, wherein the device (100) comprises:
a sensor group (104), which is formed to capture first sensor data and second sensor data;
a processor (110), which is formed
based on the first sensor data, to respectively associate a first probability with each edge of a plurality of first edges of the road network, with which the vehicle (102) is located in the road section (106) respectively associated with the first edge or in the lane respectively associated with the first edge,
**characterized in that**
the processor (110) is formed
based on the second sensor data and the probabilities respectively associated with the first edges, to respectively associate a second probability with each edge of a plurality of second edges of the road network, with which the vehicle (102) is located in the road section (106) respectively associated with the second edge or in the lane respectively associated with the second edge, wherein the plurality of second edges is at least a subset of the plurality of first edges, and
to ascertain the second edge with the highest associated probability as the position of the vehicle (102), and
to ascertain the second probabilities using a Bayes filter by means of a transition matrix P_{t+1,y,t,x} and the first probabilities, wherein the first probabilities correspond to the probabilities p(ztlx), with which the first sensor data zₜ captured at the point of time t is captured on the assumption that the vehicle is located in a position x, and the second probabilities correspond to the probabilities p(y), with which the vehicle is located in a position y at the point of time t+1, and
the processor (110) is formed to ascertain the transition matrix based on ego motion data and/or image data, and herein to evaluate transitions into a position, which is opposite to the direction of travel of the vehicle, as improbable, wherein a camera of the sensor group (104) is formed to capture the image data as at least a part of the first sensor data and/or at least a part of the second sensor data, wherein the image data corresponds to an image of a capturing range (108) in front of or behind the vehicle (102), and the camera is formed to capture the ego motion data of the vehicle (102) at least as a part of the second sensor data by means of the image data.

## Revendications

1. Procédé pour déterminer une position d'un véhicule (102) dans un réseau routier comprenant une pluralité d'arêtes (202a à 202f) qui sont respectivement associées à un tronçon de route (106) ou à une voie de circulation sur un tronçon de route, au moyen d'un groupe de capteurs (104) du véhicule (102), comportant :
détecter des premières données de capteurs au moyen du groupe de capteurs (104),
sur la base des premières données de capteurs, associer respectivement à chaque arête d'une pluralité de premières arêtes du réseau routier, une première probabilité que le véhicule (102) se trouve dans le tronçon de route (106) respectivement associé à la première arête ou dans la voie de circulation respectivement associée à la première arête,
détecter des secondes données de capteurs au moyen du groupe de capteurs (104),
sur la base des secondes données de capteurs et des probabilités respectivement associées aux premières arêtes, associer respectivement à chaque arête d'une pluralité de secondes arêtes du réseau routier, une seconde probabilité que le véhicule (102) se trouve dans le tronçon de route (106) respectivement associé à la seconde arête ou dans la voie de circulation respectivement associée à la seconde arête, et
déterminer que la seconde arête ayant la plus grande probabilité associée est la position du véhicule (102),
**caractérisé en ce que**
la pluralité de secondes arêtes est un sous-ensemble de la pluralité de premières arêtes, et
les secondes probabilités sont déterminées en utilisant un filtre de Bayes au moyen d'une matrice de passage P_{*t*+1,*y*,*t*,*x*} et des premières probabilités, les premières probabilités correspondant aux probabilités *p*(*zₜ*|*x*) que les premières données de capteurs *zₜ* détectées à l'instant *t* soient détectées en supposant que le véhicule se trouve dans une position *x,* et les secondes probabilités correspondant aux probabilités *p*(*y*) que le véhicule se trouve dans une position y à l'instant *t* + 1, et
la matrice de passage est déterminée sur la base de données d'égo-mouvement et/ou de données d'image, et des transitions vers une position opposée à la direction de déplacement du véhicule sont estimées comme étant improbables, les données d'image étant détectées au moyen d'une caméra du groupe de capteurs (104) comme faisant au moins partie des premières données de capteurs et/ou comme faisant au moins partie des secondes données de capteurs, les données d'image correspondant à une image d'une zone de détection (108) à l'avant ou à l'arrière du véhicule (102), et les données d'égo-mouvement du véhicule (102) étant détectées au moyen des données d'image comme faisant au moins partie des secondes données de capteurs.

2. Procédé selon la revendication 1, dans lequel une coordonnée de capteur (206) du véhicule (102) dans un système de coordonnées universelles est détectée au moyen d'un récepteur pour un signal d'un système de navigation par satellite du groupe de capteurs (104), comme faisant au moins partie des premières données de capteurs et/ou comme faisant au moins partie des secondes données de capteurs.

3. Procédé selon la revendication 2, dans lequel une coordonnée du tronçon routier (106) respectivement associé dans le système de coordonnées universelles est associée à chaque arête du réseau routier, et dans lequel les premières probabilités sont déterminées en comparant la coordonnée de capteur (206) du véhicule (102) avec au moins une partie des coordonnées respectivement associées aux premières arêtes.

4. Procédé selon l'une des revendications précédentes, dans lequel un point d'orientation est respectivement associé à au moins un sous-ensemble des arêtes (202a à 202f) du réseau routier, dans lequel il est déterminé, sur la base des données d'image et en utilisant un procédé de reconnaissance d'objet, s'il existe un point d'orientation dans la zone de détection de la caméra, et lorsqu'il existe un point d'orientation dans la zone de détection de la caméra, les premières probabilités sont également déterminées sur la base du point d'orientation.

5. Procédé selon l'une des revendications précédentes, dans lequel un point de repère est respectivement associé à au moins un sous-ensemble des arêtes (202a à 202f) du réseau routier, en particulier un feu de circulation ou un panneau de signalisation, dans lequel il est déterminé, sur la base des données d'image, s'il existe un point de repère dans l'image de la zone de détection, et lorsqu'il existe un point de repère dans l'image de la zone de détection (108), les secondes probabilités sont également déterminées sur la base du point de repère.

6. Procédé selon l'une des revendications précédentes, dans lequel le réseau routier comprend une pluralité de noeuds (204a à 204c) qui sont respectivement associés à une jonction entre au moins deux tronçons de route (106) ou entre au moins deux voies de circulation, dans lequel des noeuds (204a à 204c) associés à une jonction entre trois tronçons de route (106) ou plus ou entre trois voies de circulation ou plus, sont appelés des intersections, dans lequel il est déterminé, sur la base des premières données de capteurs ou des secondes données de capteurs, si le véhicule (102) se trouve dans un tronçon de route (106) ou dans une voie de circulation bordant une intersection, ou si le véhicule (102) se trouve dans un tronçon de route (106) ou dans une voie de circulation ne bordant aucune intersection, et les premières probabilités ou les secondes probabilités sont également déterminées sur la base de cette information.

7. Procédé selon l'une des revendications précédentes, dans lequel au moins un sous-ensemble des arêtes (202a à 202f) du réseau routier est respectivement associé à au moins une voie de circulation correspondant à une voie de circulation du tronçon routier (106) respectivement associé à l'arête, et dans lequel les premières probabilités et/ou les secondes probabilités sont également déterminées sur la base des voies de circulation respectivement associées aux secondes arêtes.

8. Procédé selon la revendication 7, dans lequel, sur la base des secondes données de capteurs de chaque voie de circulation, une probabilité que le véhicule (102) se trouve dans la voie de circulation respective est associée à chacune des secondes arêtes, et
dans lequel il est déterminé que la voie de circulation ayant la plus grande probabilité associée fait partie de la position du véhicule (102).

9. Procédé selon l'une des revendications précédentes, dans lequel une probabilité que le véhicule (102) se déplace dans la direction de déplacement respective est associée sur la base des secondes données de capteurs pour chaque direction de déplacement possible du véhicule (102),
dans lequel il est déterminé que la direction de déplacement ayant la plus grande probabilité associée fait partie de la position du véhicule (102).

10. Procédé selon l'une des revendications précédentes, dans lequel au moins une direction de déplacement possible est respectivement associée à au moins un sous-ensemble des arêtes (202a à 202f) du réseau routier, et dans lequel les premières probabilités sont également déterminées sur la base des directions de déplacement possibles respectivement associées aux premières arêtes.

11. Procédé selon l'une des revendications précédentes, dans lequel les probabilités respectivement associées aux premières arêtes sont comparées à une probabilité minimale, et dans lequel il est déterminé que les premières arêtes dont les probabilités respectivement associées sont supérieures ou égales à la probabilité minimale, sont les secondes arêtes.

12. Dispositif (100) pour déterminer une position d'un véhicule (102) dans un réseau routier comprenant une pluralité d'arêtes (202a à 202f) qui sont respectivement associées à un tronçon de route (106) ou à une voie de circulation, le dispositif (100) comprenant :
un groupe de capteurs (104) conçu pour détecter des premières données de capteurs et des secondes données de capteurs ;
un processeur (110) conçu pour :
sur la base des premières données de capteurs, associer respectivement à chaque arête d'une pluralité de premières arêtes du réseau routier, une première probabilité que le véhicule (102) se trouve dans le tronçon de route (106) respectivement associé à la première arête ou dans la voie de circulation respectivement associée à la première arête,
**caractérisé en ce que**
le processeur (110) est conçu pour :
sur la base des secondes données de capteurs et des probabilités respectivement associées aux premières arêtes, associer respectivement à chaque arête d'une pluralité de secondes arêtes du réseau routier, une seconde probabilité que le véhicule (102) se trouve dans le tronçon de route (106) respectivement associé à la seconde arête ou dans la voie de circulation respectivement associée à la seconde arête, la pluralité de secondes arêtes étant au moins un sous-ensemble de la pluralité de premières arêtes, et déterminer que la seconde arête ayant la plus grande probabilité associée est la position du véhicule (102), et
déterminer les secondes probabilités en utilisant un filtre de Bayes au moyen d'une matrice de passage *P*_{*t*+1,*y*,*t*,*x*} et des premières probabilités, les premières probabilités correspondant aux probabilités *p*(*zₜ*|*x*) que les premières données de capteurs *zₜ* détectées à l'instant t soient détectées en supposant que le véhicule se trouve dans une position *x,* et les secondes probabilités correspondant aux probabilités *p*(*y*) que le véhicule se trouve dans une position y à l'instant *t* + 1, et
le processeur (110) est conçu pour déterminer la matrice de passage sur la base de données d'égo-mouvement et/ou de données d'image, et pour estimer que des transitions vers une position opposée à la direction de déplacement du véhicule sont improbables, une caméra du groupe de capteurs (104) étant conçue pour détecter que les données d'image font au moins partie des premières données de capteurs et/ou font au moins partie des secondes données de capteurs, les données d'image correspondant à une image d'une zone de détection (108) à l'avant ou à l'arrière du véhicule (102), et la caméra étant conçue pour déterminer que les données d'égo-mouvement du véhicule (102) font au moins partie des secondes données de capteurs.
